# EUROPÄISCHE PATENTANMELDUNG

(11) **EP 0 746 970 A2**
(43) Veröffentlichungstag der Anmeldung: **11.12.1996**
(21) Anmeldenummer: 96108846.5
(22) Anmeldetag: 03.06.1996
(51) Int. Cl.: A01C 23/00

(54) **Gülleausbringvorrichtung für Güllefahrzeuge**

(30) Priorität: 08.06.1995 DE 19520950
(71) Anmelder: Zunhammer Gülle-Technik, 83301 Traunreut (DE)
(72) Erfinder: Zunhammer, Sebastian, 83301 Traunreut (DE)

(57) **Zusammenfassung**

Gemäß Figur 1 ist ein Güllefahrzeug (1) mit einem Ausleger (6) versehen, welcher Schleppschläuche (8) zur bodennahen Ausbringung der Gülle (5) trägt. Mittels einer fluidbeaufschlagten Quetschvorrichtung (10) wird das Nachlaufen der Gülle (5) aus den Schleppschläuchen (8) vermieden.

## Beschreibung

Die Erfindung betrifft eine Gülle-Ausbringvorrichtung für Güllefahrzeuge nach dem Oberbegriff des Anspruches 1.

Im Zuge einer umweitgerechteren Agrartechnik haben sich Gülle-Ausbringvorrichtungen bewährt, bei denen die sogenannte Schleppschlauchtechnik zum Einsatz kommt. Dabei sind an einem Güllefahrzeug in einer Arbeitshöhe von etwa 1 bis 2 m über dem Erdboden in der Regel zwei horizontale Ausleger nach links und rechts angebracht, die ein Verteiler-Leitungssystem für die aus dem Güllebehälter des Fahrzeuges herantransportierte Gülle tragen. Dieses Verteiler-Leitungssystem ist mit einer Vielzahl von über die Länge der Ausleger verteilten Auslaufstutzen für die Gülle versehen. Jeder Auslaufstutzen ist mit einem nach unten hängenden Schleppschlauch versehen, der bodennah endet. Damit wird ein Ausfließen der Gülle direkt auf den Boden ermöglicht, womit sowohl die verdunstungsfördernde Aerosolbildung als auch ein Verschmutzen der Pflanzenblätter vermieden wird.

Bei Güllefahrzeugen mit der bekannten Schleppschlauchtechnik, die auf wechselnden Feldern eingesetzt werden sollen und deshalb reguläre Straßen befahren müssen, stellt sich das Problem, daß aus den Schleppschläuchen ein Gülle-Nachlauf zu verzeichnen ist, durch den die Straßen in unzulässiger und gefährlicher Weise verschmutzt werden. Darüber hinaus erzeugen diese Verschmutzungen eine unerwünschte Geruchsbelästigung.

Im DE-GM 92 05 671,7 (BSA) ist eine Gülle-Ausbringvorrichtung beschrieben, mit der dieses Problem zwar gelöst worden ist, aber die sehr aufwendige technische Lösung konnte in der Praxis nicht überzeugen.

Ausgehend von den geschilderten Problemen liegt der Erfindung die Aufgabe zugrunde eine Gülle-Ausbringvorrichtung der gattungsgemäßen Art derart zu verbessern, daß ein Straßenfahrbetrieb problemlos möglich ist, wobei der technische Aufwand gering sein soll. Ferner soll die Gülleausbringvorrichtung störungssicher arbeiten und universell einsetzbar sein.

Die Lösung dieser Aufgabe ist im Anspruch 1 angegeben. Aufgrund der erfindungsgemäß vorgesehenen Quetschvorrichtung wird das Nachlaufen der Gülle aus den Schläuchen völlig vermieden oder zumindest so weit reduziert, daß ein Straßenfahrbetrieb problemlos möglich ist.

Mit Hilfe der Zeichnungen soll die Erfindung anhand eines Ausführungsbeispiels noch näher erläutert werden.
Es zeigt:
Figur 1 ein Güllefahrzeug
Figur 2 eine Einzelheit (Z) aus Figur 1 außer Betrieb;
Figur 3 die Einzelheit (Z) aus Figur 1 in Betrieb und
Figur 4 eine Rückansicht des Güllefahrzeuges gemäß Figur 1

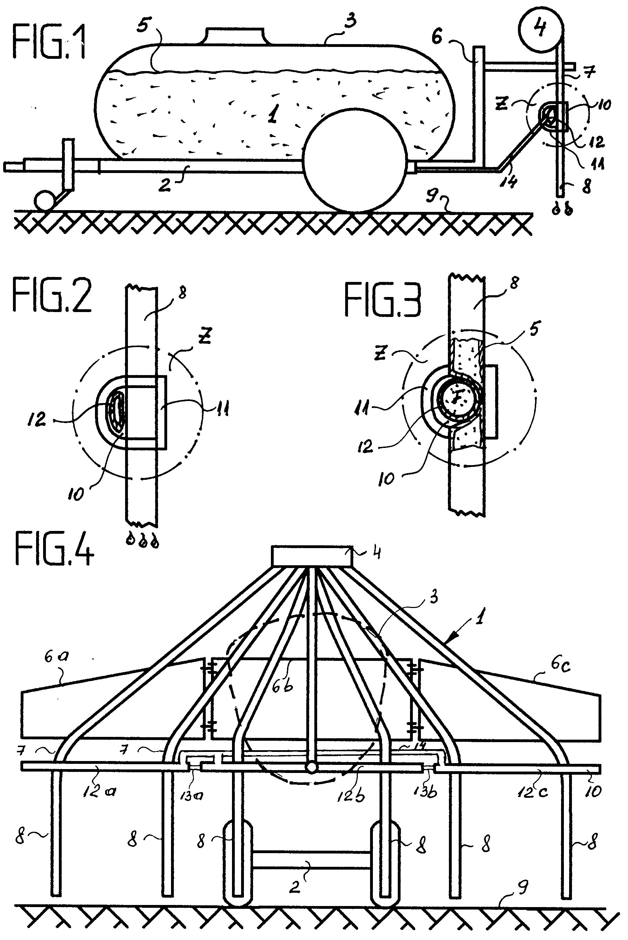

In Figur 1 ist ein Güllefahrzeug (1) - hier ein Fahzeuganhänger - dargestellt. Auf einem Fahrgestell (2) ist ein Güllebehälter (3) angeordnet. Am Heck des Güllefahrzeuges (1) befindet sich ein Verteiler (4) für die im Güllebehälter (3) befindliche Gülle (5). Das Güllefahrzeug (1) verfügt über einen mehrteiligen, horizontal verlaufenden Ausleger (6), der anhand von Figur 4 noch näher beschrieben wird.

Am Ausleger (6) befinden sich Auslaufstutzen (7) für die Gülle (5). Am freien Ende der Auslaufstutzen (7) sind Schleppschläuche (8) angebracht, die unmittelbar oberhalb des zu düngenden Bodens (9) enden. Über den Verteiler (4), die Auslaufstutzen (7) und die Schleppschläuche (8) wird die Gülle (5) aus dem Güllebehälter (3) unmittelbar dem Boden (9) zugeführt.

Wie bereits eingangs erwähnt wurde, stellen sich bei Straßenfahrten mit dem Güllefahrzeug (1) Probleme ein, wenn ein Gülle-Nachlauf aus den Schleppschläuchen (8) nicht vermieden wird.

Mittels einer Quetschvorrichtung (10), die als Einzelheit (Z) in den Figuren 2 und 3 noch näher beschrieben wird, wird dieses Problem auf einfache Weise gelöst.

In Bodennähe - oder auch an beliebiger anderer Stelle - ist die Quetschvorrichtung (10) vorgesehen, die mechanisch am Ausleger (6) angeordnet sein kann. Die Quetschvorrichtung (10) besteht aus einem Umgriff (11) für die einzelnen Schleppschläuche (8), die einzeln oder gemeinsam umgriffen sein können. Der Umgriff (11) umgreift sowohl die Schleppschläuche (8) als auch einen flexiblen Quetschschlauch (12). Der Umgriff (11), der jeweilige Schleppschlauch (8) und der Quetschschlauch (12) sind so aufeinander abgestimmt, daß bei fluidgefülltem Quetschschlauch (12) der jeweilige Schleppschlauch (8)-Durchlaß-Querschnitt bis auf den Durchlaß 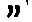 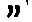 0" reduziert werden kann.

Bevorzugt wird der Quetschschlauch (12) mit Druckluft (F) befüllt, welche in hinreichender Menge und mit hinreichendem Druck am Güllefahrzeug (1) zur Verfügung steht.

In der Praxis bedeutet dies, daß bei der Ausbringung der Gülle (5) auf dem zu düngenden Feld der Quetschschlauch (12) drucklos ist, wie in Figur 2 dargestellt. Die Gülle (5) kann also aus dem Güllefahrzeug (1) über den Verteiler (4), die Auslaufstutzen (7) und die Schleppschläuche (8) ungehindert austreten. Dabei ist der Ausleger (6) in Arbeitsstellung, d.h., seine klappbaren Teilvorrichtungen (6a, 6b und 6c) sind quer zur Fahrtrichtung ausgeklappt und die Gülle (5) wird ausgebracht.

Aus Figur 4 ist ersichtlich, daß der elastische Quetschschlauch 12 aus an den Stirnseiten weitgehend verschlossenen Teilstücken 12a, 12b, 12c besteht, die durch Druckschläuche 13a, 13b gelenkig so miteinander verbunden sind, daß sie mittels einer Speiseleitung 14 einzeln oder gemeinsam mit Fluid F befüllbar sind. Die teilweise beziehungsweise abschnittsweise Befüllung mit Fluid F hat den großen Vorteil, daß Teilbreiten des Auslegers 6 zur Gülleausbringung ab- bzw. zugeschaltet werden können. Damit können verschiedene Effekte erzielt werden. So kann durch taktweise Ansteuerung beliebiger Teilabschnitte 12a, 12b oder 12c in einzelnen Teilabschnitten 12a, 12b oder 12c der Gülledruck erhöht werden, wenn bei gleichbleibender Gülleförderung einzelne der Teilabschnitte 12a, 12b oder 12c durch Abquetschen der entsprechenden Teilabschnitte 12a, 12b oder 12c des Quetschschlauches 12 versperrt werden.
Ferner können Teilbreiten des Ausleger 6 gezielt gesperrt werden, indem in den gewünschten Teilbreiten des Auslegers 6 die zugehörigen Teilstücke 12a, 12b und/oder 12c gequetscht werden und durch die Quetschung der Austritt der Gülle aus den Schleppschläuchen 8 verhindert wird, welche den gequetschten Teilstücken 12a, 12b oder 12c zugeordnet sind.
Bei der Gülleausbringung können somit auf einfachste Weise Teilbereiche des Bodens mit Gülle versehen werden, selbst wenn deren Breite nicht ein ganzzahliges Vielfaches der Auslegerbreite beträgt. Die Ausbringung der Gülle kann mit Hilfe der Erfindung der Bodengeometrie auf einfache Weise angepaßt und dadurch Falschdüngung vermieden werden.
Da ferner die Durchflußmenge aufgrund der möglichen Querschnittsveränderung der Schleppschlauchquerschnitte gesteuert werden kann, läßt sich die Gülleausbringung in einfacher Weise optimieren.
Die Befüllung der Quetschschläuche 12, 12a, 12b, 12c kann manuell oder fremdgesteuert - auch programmgesteuert erfolgen.

Nach Beendigung des Arbeitsvorganges - wenn das Güllefahrzeug (1) also am Straßenverkehr teilnehmen soll - wird der Ausleger (6) in Fahrtrichtung geklappt, so daß die Teilvorrichtungen (6a und 6c) in Fahrtrichtung, d. h. parallel zur Längsachse des Güllefahrzeuges (1) verlaufen.

Spätestens in dieser Stellung wird der Quetschschlauch (12) aufgepumpt (Figur 3) und quetscht die Schleppschläuche (8) ab, so daß weiterer Gülleausfluß sicher vermieden wird. Die vorteilhafte gelenkige Ausführung der Quetschvorrichtung (10) ermöglicht also das erfindungsgemäße Verschließen der Schleppschläuche (8) sowohl in der Arbeitsposition, in der Stellung für den Straßenverkehr und sogar während des Wechsels von der Arbeitsposition in die Straßenfahrposition. Da die Verbindungen (13a, 13b) zwischen den Teilstücken (12a, 12b, 12c) des Quetschschlauches (12) sowie der Quetschschlauch (12) selbst bevorzugt elastisch sind, ist der Aufwand zur Klappung des Quetschschlauches (12) zusammen mit dem Ausleger (6) äußerst gering.

Die Befüllung des Quetschschlauches (12) mit Fluid (F) erfolgt über eine Speiseleitung (14), die mit dem Güllefahrzeug (1) bzw. mit einem zugehörigen Kraftfahrzeug, welches ein nicht dargestelltes landwirtschaftliches Zugfahrzeug sein kann, verbunden ist und von diesem versorgt wird.

Es ist ersichtlich, daß mit der Quetschvorrichtung (10) an der Gülle-Ausbringvorrichtung des Güllefahrzeuges (1) das Nachlaufen der Gülle (5) auf einfachste Weise sicher vermieden wird.

## Patentansprüche

1. Gülle-Ausbringvorrichtung für Güllefahrzeuge mit
- mindestens einem am Güllefahrzeug in der Arbeitshöhe anbringbaren, horizontalen Ausleger,
- einem Verteiler für die Gülle, der einspeisungsseitig mit einem Gülle-Behälter verbindbar ist und der mit wenigstens einem Auslaufstutzen für die Gülle versehen ist, und
- jeweils von den Auslaufstutzen nach unten hängenden, bodennah endenden Schleppschläuchen, wobei die Schleppschläuche - voneinander beabstandet
- längs des horizontalen Auslegers angeordnet sind dadurch gekennzeichnet, daß der Durchlaß-Querschnitt der Schleppschläuche (8) mittels einer Quetschvorrichtung (10) beliebig reduzierbar ist, wobei die Quetschvorrichtung (10) durch wenigstens einen elastischen Schlauch (12) gebildet wird, der mit Fluid (F) befüllbar ist, und der quer zur Längsstreckung der Schleppschläuche (8), im wesentlichen senkrecht dazu verläuft.

2. Gülle-Ausbringvorrichtung nach Anspruch 1 dadurch gekennzeichnet, daß das Fluid (F) ein Gas oder eine Flüssigkeit ist.

3. Gülle-Ausbringvorrichtung nach Anspruch 1, bei der der mindestens eine horizontale Ausleger zwischen einer quer zur Fahrtrichtung verlaufenden Arbeitsposition und einer in Fahrtrichtung verlaufenden Straßenfahrposition relativ zum Güllefahrzeug klappbar ist, dadurch gekennzeichnet, daß die Quetschvorrichtung (10, 12, 12a, 12b, 12c) mehrteilig ausgebildet und zusammen mit dem Ausleger (6, 6a, 6b, 6c) klappbar ist, wobei die klappbaren Teilvorrichtungen (6a, 6b, 6c; 12a, 12b, 12c) jeweils gelenkig miteinander verbunden sind.

4. Gülle-Ausbringvorrichtung nach Anspruch 1 dadurch gekennzeichnet, daß der elastische Schlauch (12) aus an den Stirnseiten weitgehend verschlossenen Teilstücken (12a, 12b, 12c) besteht, die durch Druckschläuche (13a, 13b) gelenkig miteinander so verbunden sind, daß sie mittels einer Speiseleitung (14) einzeln oder gemeinsam mit Fluid (F) befüllbar sind.
